Europäisches Patentamt

European Patent Office

Office européen des brevets

(19)

(11) Veröffentlichungsnummer : **0 049 005**
**B1**

# (12) EUROPÄISCHE PATENTSCHRIFT

(45) Veröffentlichungstag der Patentschrift :
26.06.85

(21) Anmeldenummer : 81200827.4

(22) Anmeldetag : 20.07.81

(51) Int. Cl.⁴ : **B 64 D   1/04**

(54) Einrichtung an einem Flugzeug zum Abwerfen von Gegenständen.

(30) Priorität : 29.09.80 CH 7264/80

(43) Veröffentlichungstag der Anmeldung :
07.04.82 Patentblatt 82/14

(45) Bekanntmachung des Hinweises auf die Patenterteilung : 26.06.85 Patentblatt 85/26

(84) Benannte Vertragsstaaten :
AT BE CH DE FR GB IT LI LU NL SE

(56) Entgegenhaltungen :
CH-A-   499 083
DE-B- 1 277 678
DE-C-   266 328
DE-C-   355 161
FR-A- 1 005 077
GB-A-   533 284
GB-A-   709 300
US-A- 2 470 120
US-A- 2 723 093
US-A- 2 791 387
US-A- 2 816 483
US-A- 2 905 055 .
US-A- 3 056 335
US-A- 3 160 373
US-A- 3 514 957

(73) Patentinhaber : Schweizerische Eidgenossenschaft
vertreten durch das Eidgenössisches Flugzeugwerk
Emmen der Gruppe für Rüstungsdienste
CH-6032 Emmen (CH)

(72) Erfinder : Degen, Max, Dipl.-Ing.
Bächtenbühlstrasse 15
CH-6006 Luzern (CH)

(74) Vertreter : Frauenknecht, Alois J.
c/o PPS Polyvalent Patent Service AG Fohrhölzlistrasse 19
CH-5443 Niederrohrdorf (CH)

## Beschreibung

Die vorliegende Erfindung betrifft eine Einrichtung an einem Flugzeug zum Abwerfen von widerstandsstabilisierten Gegenständen, insbesondere explosiven Gegenständen wie Bomben, Granaten und Minen, bestehend aus wenigstens einem am Flugzeug angebrachten Transportbehälter mit mehreren darin hintereinander untergebrachten, zum Abwurf bestimmten Gegenständen, welche koaxial miteinander und mit dem Transportbehälter ausgerichtet sind und wobei der Transportbehälter wenigstens einen frontseitig ausgerichteten, dem Flug-Staudruck ausgesetzten Lufteinlass und heckseitig einen Luftaustritt aufweist.

Beim zivilen und militärischen Einsatz von Flugzeugen wird oft die flächenhafte Belegung von Zielen (Katastrophengebiete ; Bekämpfung von Waldbränden oder vorbeugende Auslösung von Lawinen, Agrarwirtschaft bzw. Geschützstellungen, Flugpisten etc.) gefordert. Beim taktischen Einsatz von Kampfflugzeugen werden hierzu sogenannte Schüttbomben- oder Streubehälter verwendet, welche am Flugzeugrumpf angebracht sind und nach erfolgtem Abwurf der Bomben meist durch pyrotechnische Mittel abgeworfen werden (vgl. Armada International 1980, Heft Nr. 3, Seite 130).

Bei derartigen Systemen ergibt sich die Schwierigkeit einer ausreichenden Verzögerung der meist kleinen Bomben (sogenannte Bomblets) nach dem Auswurf, zur Einhaltung der erforderlichen Sicherheitsabstände zum Flugzeug. Im weiteren ist aus wirtschaftlichen Gründen, insbesondere bei nicht kampftaktischen Einsätzen eine Wiederverwendung des Schüttbombenbehälters wünschenswert.

Aus der US-PS-2 723 093 ist eine Einrichtung zum Abwerfen von Gegenständen mit einem in einzelne Magazine aufgeteilten Transportbehälter für Flugzeuge gemäß dem Oberbegriff des Anspruchs 1 bekannt. In jedem Magazin ist ein einzeln abzuwerfendes Objekt (Munitionskörper) eingelagert. Über Umlenkeinrichtungen und Drosseln wird der Flug-Staudruck zuerst in das hinterste, heckseitige Magazin eingeleitet, wobei sich ein Druck über dem Munitionskörper aufbaut und diesen aus dem Magazin ausschiebt. In gleicher Weise wird nun das jeweils nächste, das dem leeren Magazin vorgelagerte Magazin entleert, bis der letzte, d. h. der frontseitig erste Munitionskörper, ausgeschoben ist. Zum Ausstoss jedes einzelnen Objekts müssen die jeweils zugehörigen Umlenk-, Drossel- und Entsicherungseinrichtungen einzeln betätigt werden.

Dieses System ist in seiner Konstruktion aufwendig, nutzt den zur Verfügung stehenden Raum im Transportbehälter nur sehr beschränkt aus, und bedarf hydraulischer und komplizierter mechanischer Einrichtungen zur Steuerung und Umlenkung des Staudrucks, welche zu Störungen Anlass geben können. Es ist zur gleichmässigen und gezielten flächenhaften Belegung von Zielen ungeeignet ; die abzuwerfenden Objekte weisen, bedingt durch die Ausgestaltung des Transportbehälters, ein unstabiles oder unbestimmtes Flugverhalten auf. Aufgrund der Trägheit des Steuer- und Umlenkvorgangs ist zudem eine konzentrierte flächenhafte Belegung eines Zieles zeitlich nicht möglich.

Im weiteren ist ein an einem Flugzeug angeordneter Geschosswerfer bekannt (CH-PS 499 083), in welchem die Geschosse dichtend gegenüber der Rohrinnenwand des Werfers in einer Reihe angeordnet sind. Mittels einer Treibladung werden die Geschosse entgegen der Flugrichtung abgeschossen, wobei der von der Treibladung erzeugte Gasdruck, unter Berücksichtigung des Staudrucks und damit der Fluggeschwindigkeit, gesteuert wird.

Die derart pyrotechnisch beschleunigten Geschosse entfalten nach dem Verlassen der Werfers Bremsflügel und gleiten stabilisiert zu Boden.

Dieser Geschosswerfer ist aufwendig in seiner Herstellung und im Unterhalt. Durch den Einbau der Treibladung und die notwendige, geschwindigkeitsabhängige Steuerung des Treibgasdrucks erhöht sich das Sicherheitsrisiko bzw. der Sicherheitsaufwand. Zudem besteht die Gefahr, dass ein beispielsweise durch eine Zwischenlagerung an der Oberfläche beschädigtes oder verschmutztes Geschoss im Rohrinnern des Werfers blockiert.

Es ist daher Aufgabe der Erfindung, eine sicher funktionierende Einrichtung zu schaffen, welche eine gezielte flächenhafte Belegung mit Gegenständen erlaubt. Die Einrichtung soll eine hohe negative Beschleunigung der abzuwerfenden Gegenstände, relativ zum Flugzeug aufweisen, ohne dass Treibladungen erforderlich sind. Ebenso sollen keine aufwendigen hydraulischen und/oder mechanischen Steuereinrichtungen zur Funktion notwendig sein. Die gezielte flächenhafte Belegung mit Gegenständen soll in konzentrierter Form erfolgen können. Ferner soll die am Flugzeug installierte Abwurfeinrichtung wiederverwendbar sein.

Erfindungsgemäss wird dies durch eine Einrichtung dadurch erzielt, dass im Luftkanal, der sich im Inneren des Transportbehälters befindet und direkt mit dem Lufteinlass verbunden ist, die widerstandsstabilisierten Gegenstände miteinander in gegenseitiger Berührung stehen und mit starren, tellerförmigen Bremsleitwerken versehen sind, dass die Gegenstände auf wenigstens einer Leitschiene gelagert sind, dass die Leitschiene in wenigstens eine Ausnehmung des tellerförmigen Bremsleitwerks eingreift, dass zwischen der inneren Wandung des Transportbehälters und den Gegenständen und/oder deren Bremsleitwerke Luftspalte vorgesehen sind und dass der Transportbehälter zur gleichzeitigen Deblockierung aller Gegenstände mit einer einzigen steuerbaren Blockierungsvorrichtung versehen ist.

Diese Einrichtung zeichnet sich durch ihre Einfachheit sowohl in der Herstellung wie auch in der Bedienung aus. Die am Boden erzielten Trefferbilder, insbesondere beim Tiefabwurf, weisen günstige Längen- und Breitenstreuungen auf. Der Abwurf führt zu keinen negativen Rückwirkungen auf die Manövrierfähigkeit des Flugzeugs und verursacht nur minimale dynamische Anregungen.

Vorteilhafte Weiterbildungen der Erfindung sind in den nachfolgenden Unteransprüchen beschrieben.

Durch den in Anspruch 2 erwähnten Leitring kann dem am Transportbehälter austretenden Gegenstand ein zusätzlicher fluid-mechanischer Impuls verabfolgt werden, so dass die ausgestossenen Gegenstände sich gegenseitig nicht ungünstig beeinflussen oder gar berühren.

Eine Ausgestaltung des Gegenstandes in Zylinderform nach Anspruch 3 ergibt eine hohe Packungsdichte im Transportbehälter. Zudem kann der Zylinder durch weitere einfache strömungstechnische Massnahmen (Bremsklappen, Fallschirme etc.) nach seinem Ausstoss aus dem Transportbehälter zusätzlich zum bereits im Anspruch 1 erwähnten Bremsleitwerk verzögert werden.

Die in Anspruch 4 angegebene Kugelform des Gegenstands ergibt in Verbindung mit dem Bremsleitwerk eine günstige Verzögerungswirkung, ein gutes dynamisches Flugverhalten und ist insbesondere leicht stapel- und manipulierbar.

Durch das in Anspruch 5 erwähnte Anbringen von Dämpfungsflossen können Nickbewegungen des Gegenstandes beim Abwurf und damit ein dynamisch instabiles Flugverhalten verhindert werden.

Die Ausgestaltung nach Anspruch 6 sichert in einfacher Weise die Lage der Gegenstände und bewirkt nur minimale Widerstände für die durchströmende Luft.

Die Weiterbildung nach Anspruch 7 erlaubt eine maximale Ausnutzung des im Transportbehälter vorhandenen Raums, ergibt geringe Reibverluste beim Ausstossen der Gegenstände und erweist sich aerodynamisch als günstig.

Eine weitere Ausführungsform weist eine steuerbare Klappe, gemäss Anspruch 8, auf, wodurch die im Transportbehälter gelagerten Gegenstände mittels eines Rechteck-Druckstosses optimal beschleunigt werden. Zudem kann die steuerbare Klappe als mechanischer Schutz (Witterungseinflüsse, Vögel etc.) des Innern des Transportbehälters verwendet werden.

Eine Variante nach Anspruch 9 dient der Beeinflussung des Druckverlaufs im Innern des Behälters ; damit kann das Ausstossverhalten der Gegenstände optimiert werden. Ausserdem könnte dadurch bei Gegenständen mit relativ geringen Massen auf einen zentralen, frontseitigen Lufteinlass verzichtet werden.

Nachfolgend wird anhand von schematischen Zeichnungen der Erfindungsgegenstand sowie einige mögliche Varianten näher erläutert.

Es zeigen

Figur 1 einen an einem Tragflügel eines Flugzeugs angebrachten Transportbehälter während des Abwurfs von Gegenständen,

Figur 2a einen hülsenartigen Gegenstand zur Aufnahme von Rettungsgeräten etc., in Längs-Schnittdarstellung,

Figur 2b den Gegenstand aus Fig. 2a im freien Fall von oben betrachtet,

Figur 3a einen kugelförmigen Gegenstand mit Bremsleitwerk und Dämpfungsflossen,

Figur 3b den Gegenstand aus Fig. 3a in einer Ansicht von vorne,

Figur 4 ein Drosselventil mit Regeleinrichtung zur Einstellung eines vorbestimmten, reduzierten Flug-Staudrucks und

Figur 5 einen Teilschnitt eines Transportbehälters mit seitlichem Lufteinlass und seitlichem Luftauslass.

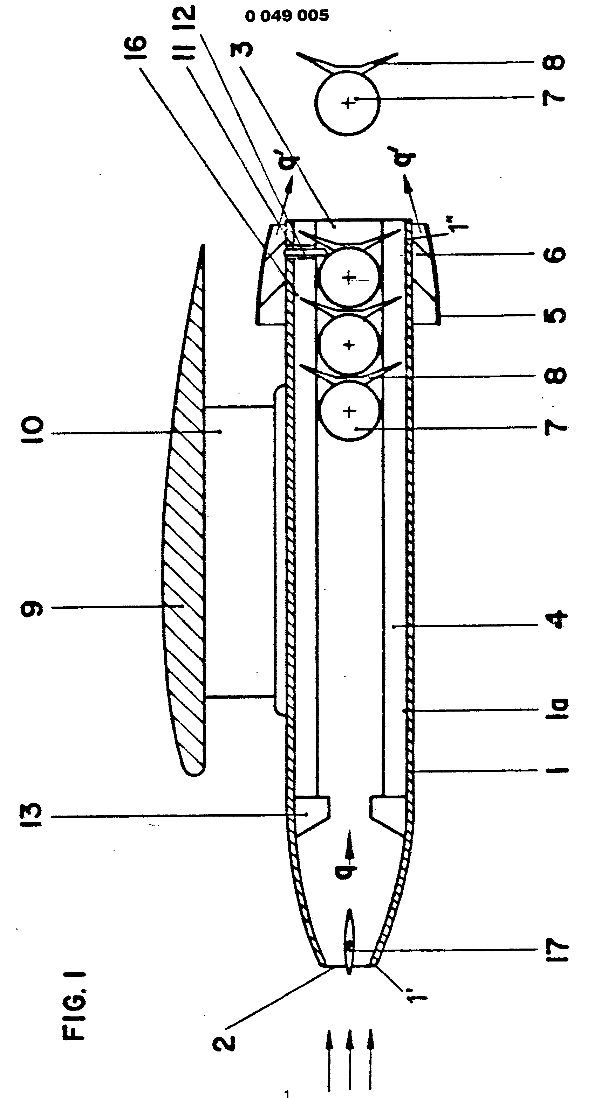

In Fig. 1 ist ein zylinderförmiger Transportbehälter mit frontseitig auslaufender Spitze 1' mit 1 bezeichnet. In der Spitze 1' befindet sich ein Lufteinlass 2, in welchem eine Klappe 17 drehbar gelagert ist. Heckseitig weist der Transportbehälter 1 im Heck 1" einen zentralen Luftaustritt 3 auf. Auf Transportschienen 4 sind Gegenstände 7 stapelartig gelagert. Die Gegenstände 7 weisen je ein tellerförmiges Bremsleitwerk 8 auf. Im Innern des Transportbehälters 1 stellt sich bei geöffneter Klappe 17 ein Teil des Flug-Staudrucks q ein.

Der Transportbehälter 1 ist in an sich bekannter Weise mittels eines Pylon 10 am Tragflügel 9 eines Flugzeugs befestigt. Heckseitig befindet sich am Transportbehälter 1 ein Leitring 5, durch welchen eine dem Flug-Staudruck q entsprechende Aussenströmung q' hinter die Heckseite des Behälters 1 geführt ist. Die im Innern des Transportbehälters 1 nach dem Öffnen der Klappe 17 sich aufbauende Strömung vermag zwischen der inneren Wandung 1a des Transportbehälters 1 und den Dämpfungsflossen 15 gebildeten Luftspalt 16 zur Heckseite durchströmen. Der Zeitpunkt des Auslösens der Gegenstände 7, und damit deren Abwurf, wird durch Hochziehen eines in einer Blockierungsvorrichtung 11 angeordneten Bolzens 12 bestimmt.

Die Klappe 17 im Transportbehälter 1 kann ständig offen gehalten (- oder weggelassen) werden. Durch rasches Schliessen und Wiederöffnen der Klappe 17 in einem geeigneten Zeitpunkt, kann ein impulsartiger Druckverlauf im Behälter 1 erzielt werden, so dass ein noch günstigeres Ausstossverhalten der Gegenstände 7 erreicht wird.

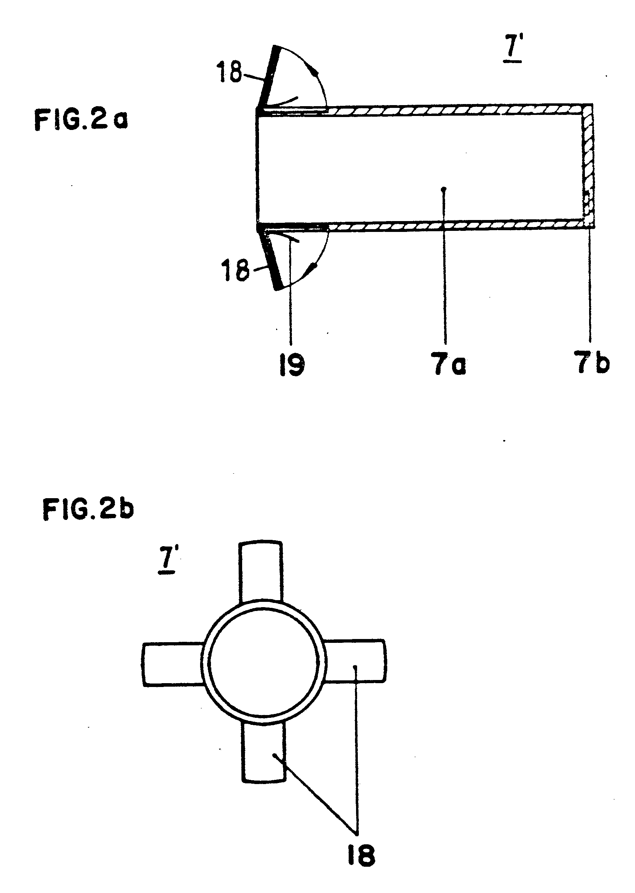

Der in Fig. 2a dargestellte zylinderförmige Gegenstand 7' weist frontseitig eine ebene Stirnwand 7b auf. Im Innern befindet sich ein relativ grosses Ladevolumen 7a, in welchem Nachschub- oder Rettungsmaterial wie beispielsweise Munition, Schlauchboote, Proviant etc. verstaut werden kann. In Pfeilrichtung aufstellbare Bremsklappen 18 weisen an ihren dem Zylinder zugewandten Seiten Blattfedern 19 auf, welche beim Austreten des Gegenstandes 7' in der in Fig. 2a und 2b dargestellten Weise als Flugbremse und Stabilisierung dienen.

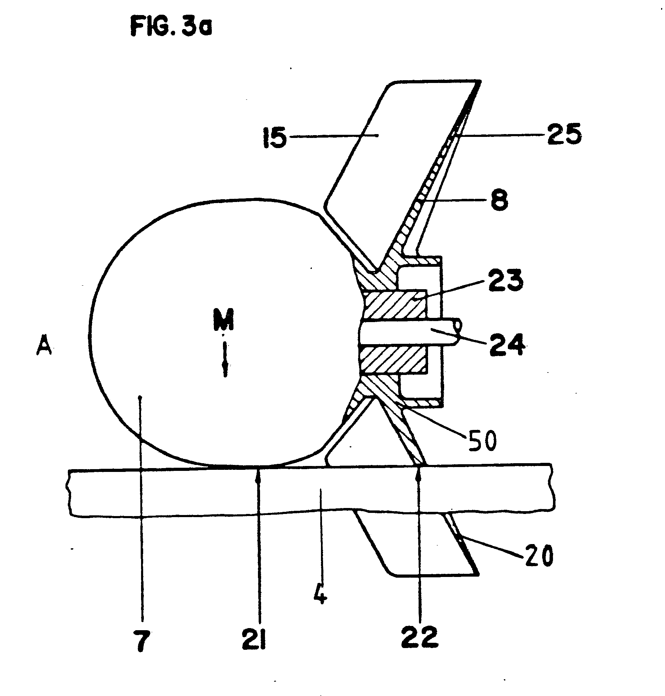

Der in Fig. 3a dargestellte kugelförmige Gegenstand 7 (Bombe) weist an seiner Heckseite 50 ein tellerförmiges Bremsleitwerk 8 mit senkrecht dazu angeordneten Dämpfungsflossen 15 und Verstärkungsrippen 25 auf. Der Gegenstand 7 liegt im Punkt 21 sowie in einem zweiten Punkt 22 einer Ausnehmung 20 im Bremsleitwerk 8 auf einer Leitschiene 4 auf. Im Zentrum des Bremsleitwerks 8 befindet sich eine an sich bekannte Zündvorrichtung 23 (Annäherungszünder) mit Zündersicherung 24.

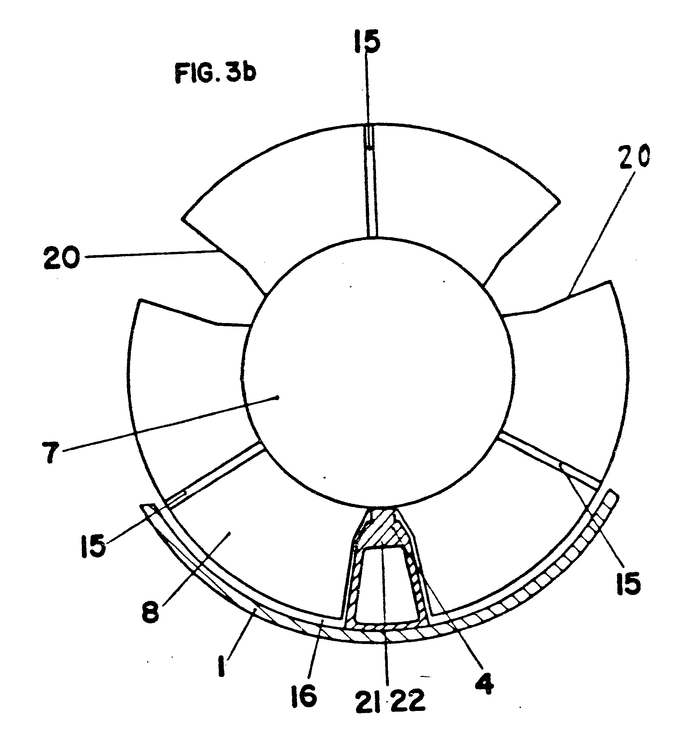

Fig. 3b in Teilansicht zeigt den gleichen Gegenstand 7 von der Seite A (vgl. Fig. 3a) betrachtet. Dabei ist wiederum das tellerförmige Bremsleitwerk 8 mit seinen Dämpfungsflossen 15 ersichtlich. In den drei schlitzförmigen Ausnehmungen 20 sind Leitschienen 4 durchgeführt. Die Masse M ist somit auf den beiden Auflagepunkten 21, 22 der unteren Leitschiene 4 gelagert. Die oberen Leitschienen 4 dienen lediglich zur seitlichen Führung.

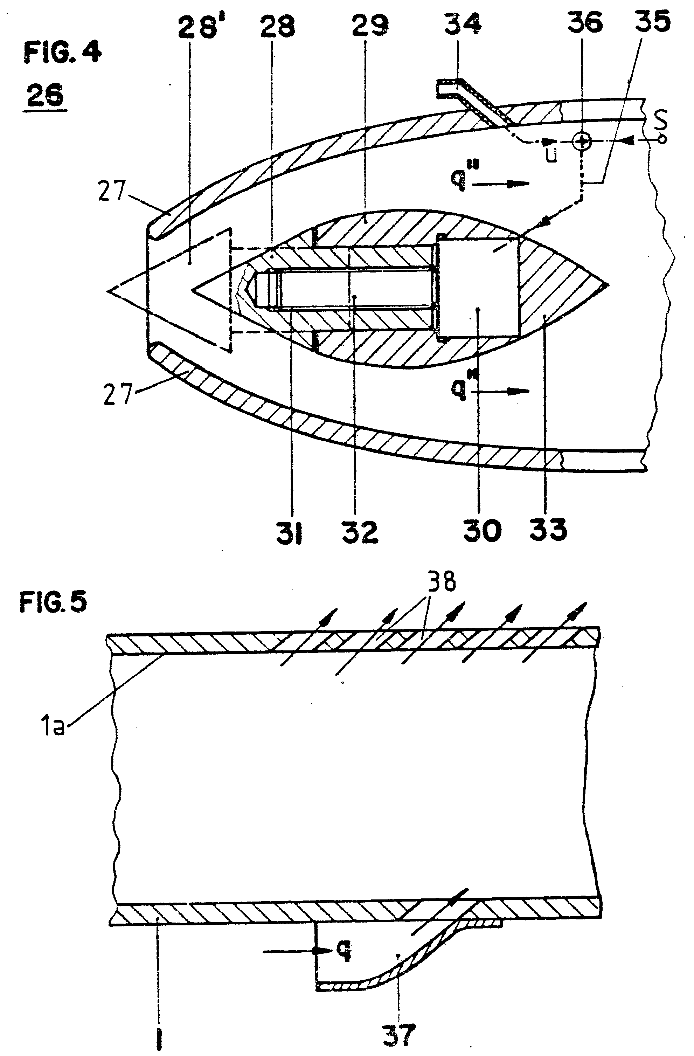

Anstelle einer einfachen Klappe 17 kann auch ein Drossel-Ventil 26, Fig. 4, vorgesehen werden. In dieser Variante wird der im Innern des Transportbehälters 1 sich einstellende Anteil des Flug-Staudrucks q" gesteuert. Zu diesem Zweck ist ein axialverschiebbarer Ventilkörper 28 mit zentraler Gewindebohrung 31 vorgesehen. In einem tropfenförmig ausgebildeten Mantel 29 befindet sich ein elektrischer Stellmotor 30, welcher durch Links- und Rechtslauf mittels eines Gewindebolzens 32 den Ventilkörper 28 durch Axialverschieben auf den geforderten Flug-Staudruck q" einstellt. Die Endstellung (Verschluss-Stellung) des Ventilkörpers 28 ist mit 28' gestrichelt eingezeichnet. Der Stellmotor 30 ist durch eine Abdeckung 33 strömungsgünstig verkleidet. Elektrische Steuerleitungen 35 führen zu einer Signalquelle mit Sollwert-Vorgabe S. Am Staudruck-Rohr 27 ist ein Pitot-Rohr 34 angeordnet, welches über einen mechanisch-elektrischen Messwandler ein dem Flug-Staudruck proportionales Mess-Signal u abgibt. In einer Signal-Verknüpfung 36 erfolgt in bekannter Weise dessen Zuschaltung zum Sollwert-Signal S.

Die in Fig. 4 dargestellte Steuerung mit Messwandler kann in beliebiger Weise durch regeltechnische Mittel den Betriebsbedingungen (Fluggeschwindigkeit, Flugzustand, Füllzustand des Behälters, Masse der Gegenstände, Reibverhältnisse etc.) angepasst, automatisiert und/oder programmiert werden.

In einer zu Fig. 4 vereinfachten Variante ist der auf einen Kolben wirkende Flug-Staudruck selbst zusammen mit einem Federsystem und einer an sich bekannten Dämpfungseinrichtung für die Druckregelung vorgesehen.

Der Erfindungsgegenstand eignet sich besonders als einfaches Tiefabwurfsystem. Bei taktischen Fluggeschwindigkeiten von ca. 180-300 m/s kann auf eine Variation des Luft-Eintrittsquerschnittes am Transportbehälter 1 verzichtet werden. Eine Bereichserweiterung lässt sich durch einen variablen Einlassquerschnitt für den Staudruck in einfacher Weise realisieren.

Durch die in Fig. 5 dargestellten zusätzlichen Öffnungen in einer Variante eines Transportbehälters 1, einem seitlichen Lufteinlass 37 und Luftauslass 38 ist das Ausstossverhalten der Gegenstände optimiert worden.

Die Ausgestaltung eines derartigen seitlichen Lufteinlasses und -auslasses richtet sich in erster Linie nach den Gegenständen (Form, Masse, Reibkräfte etc.).

Ein besonders günstiges Verhältnis der Masse des Gegenstandes zum Einheitswiderstand ($C_w$.F) und damit eine hohe Verzögerung des Gegenstandes gegenüber dem Flugzeug ist vorhanden. Die flächenhafte Belegung des Zieles ist von hoher Präzision. Das Flugverhalten der Gegenstände ist weitgehend reproduzierbar und stabil.

Die Masse der einzelnen Bomben lässt sich ohne Einbusse ihrer Flächenwirkung so wählen, dass das Beladen des Transportbehälters durch einen einzigen Mann mühelos erfolgen kann.

Das System zeichnet sich durch seine ausserordentliche Einfachheit und Wartungsfreiheit aus. Der einzige notwendige bewegliche Bestandteil des Transportbehälters ist der Bolzen in der Blockierungsvorrichtung zum Auslösen der Gegenstände ; bewährt hat sich hierzu eine pyrotechnische Aktivierung.

Ein weiterer Vorteil der Einrichtung, insbesondere der Variante ohne bzw. bei geöffneter Klappe 17, besteht im relativ geringen Strömungswiderstand des auch im beladenen Zustand durchströmten Transportbehälters sowie im nochmals verringerten Widerstand des entleerten Behälters.

## Patentansprüche

1. Einrichtung an einem Flugzeug zum Abwerfen von widerstandsstabilisierten Gegenständen (7), insbesondere explosiven Gegenständen wie Bomben, Granaten und Minen, bestehend aus wenigstens einem am Flugzeug (9) angebrachten Transportbehälter (1) mit mehreren darin hintereinander untergebrachten, zum Abwurf bestimmten Gegenständen (7), welche koaxial miteinander und mit dem Transportbehälter (1) ausgerichtet sind und wobei der Transportbehälter (1) wenigstens einen frontseitig ausgerichteten, dem Flug-Staudruck ausgesetzten Lufteinlass (2 ; 37) und heckseitig einen Luftaustritt (3) aufweist, dadurch gekennzeichnet, dass im Luftkanal, der sich im Inneren des Transportbehälters (1) befindet und direkt mit dem Lufteinlass (2 ; 37) verbunden ist, die widerstandsstabilisierten Gegenstände (7) miteinander in gegenseitiger Berührung stehen und mit starren, tellerförmigen Bremsleitwerken (8) versehen sind, dass die Gegenstände (7) auf wenigstens einer Leitschiene (4) gelagert sind, dass die Leitschiene (4) in wenigstens eine Ausnehmung (20) des tellerförmigen Bremsleitwerks (8) eingreift, dass zwischen der inneren Wandung (1a) des Transportbehälters (1) und den Gegenständen (7) und/oder deren Bremsleitwerke (8) Luftspalte (16) vorgesehen sind und dass der Transportbehälter (1) zur gleichzeitigen Deblockierung aller Gegenstände (7) mit einer einzigen steuerbaren Blockierungsvorrichtung (11) versehen ist (Fig. 1 ; Fig. 3a, 3b ; Fig. 5).

2. Einrichtung nach Anspruch 1, dadurch gekennzeichnet, dass am Transportbehälter (1) heckseitig ein Leitring (5) angeordnet ist, der die Aussenströmung (q') auf den aus dem Transportbehälter (1) austretenden Gegenstand (7) lenkt (Fig. 1).

3. Einrichtung nach einem der Ansprüche 1 bis 2, dadurch gekennzeichnet, dass der Gegenstand (7') Zylinderform aufweist (Fig. 2a, 2b).

4. Einrichtung nach einem der Ansprüche 1 bis 2, dadurch gekennzeichnet, dass der Gegenstand (7) zumindest angenähert eine Kugelform aufweist (Fig. 3a, 3b).

5. Einrichtung nach einem der vorangehenden Ansprüche, dadurch gekennzeichnet, dass am Bremsleitwerk (8) Dämpfungsflossen (15) angeordnet sind (Fig. 3a, 3b).

6. Einrichtung nach Anspruch 1, dadurch gekennzeichnet, dass der in Flugrichtung erste Gegenstand (7) an der frontseitigen Wandung (1a) oder einem Anschlag (13) auf einer Leitschiene (4) und der letzte Gegenstand (7) durch einen steuerbaren Bolzen (12) in der Blockierungsvorrichtung (11) bis zur gewollten Freigabe axialgesichert sind (Fig. 1).

7. Einrichtung nach Anspruch 1 oder 6, dadurch gekennzeichnet, dass drei an der inneren Wandung (1a) des Transportbehälters (1) angebrachte Leitschienen (4) vorgesehen sind und dass der Gegenstand (7) mit seiner Normalkraft auf zwei Punkte (21, 22) wenigstens einer unteren Leitschiene wirkt (Fig. 1, 3a, 3b).

8. Einrichtung nach Anspruch 1, dadurch gekennzeichnet, dass eine steuerbare Klappe (17) vorgesehen ist, durch welche das Innere des Transportbehälters (1) impulsartig mit dem Flug-Staudruck (q) beaufschlagt werden kann (Fig. 1).

9. Einrichtung nach Anspruch 1, dadurch gekennzeichnet, dass der Transportbehälter (1) wenigstens einen seitlichen Lufteinlass (37) und einen seitlichen Luftauslass (38) aufweist (Fig. 5).

**Claims**

1. Apparatus on an aircraft for releasing resistance-stabilised objects (7), in particular explosive objects such as bombs, grenades and mines, comprising at least one transport container (1) mounted on the aircraft (9) with a plurality of objects (7) intended for release, which are disposed behind one another therein, and which are orientated coaxially to one another and to the transport container (1) and the transport container (1) having at least one air inlet (2, 37) orientated towards the front end subjected to aerodynamic pressure and one air outlet (3) towards the tail end, characterised in that the resistance-stabilised objects (7) are in mutual contact with one another and are provided with rigid plate-shaped braking guide units (8) in the air channel, which is disposed inside the transport container (1) and is directly connected to the air inlet (2 ; 37), the objects (7) are disposed on at least one guide rail (4), the guide rail (4) engages in at least one recess (20) of the plate-shaped braking guide unit (8), air gaps (16) are provided between the inner wall (1a) of the transport container (1) and the objects (7) and/or the braking guide units (8) thereof and the transport container (1) is provided with a single controllable blocking apparatus (11) for the simultaneous unblocking of all objects (7) (Fig. 1 ; Fig. 3a, 3b ; Fig. 5).

2. Apparatus according to claim 1, characterised in that a guide ring (5) which is arranged at the tail end of the transport container (1), directs the outflow (q') onto the object (7) discharged from the transport container (1) (Fig. 1).

3. Apparatus according to any one of claims 1 to 2, characterised in that the object (7') has the shape of a cylinder (Figs. 2a, 2b).

4. Apparatus according to any one of claims 1 to 2, characterised in that the object (7) at least has a spherical shape (Figs. 3a, 3b).

5. Apparatus according to one of the above claims, characterised in that stabilising fins (15) are arranged on the braking guide unit (8) (Figs. 3a, 3b).

6. Apparatus according to claim 1, characterised in that the first object (7) in the direction of flight is secured axially on the front end wall (1a) or on a stop (13) on a guide rail (4) and the last object (7) is secured axially by a controllable pin (12) in the blocking apparatus (11) until release is desired (Fig. 1).

7. Apparatus according to claim 1 or 6, characterised in that three guide rails (4) disposed on the inner wall (1a) of the transport container (1) are provided and the object (7) acts with its normal force upon two points (21, 22) on at least one lower guide rail (Figs. 1, 3a, 3b).

8. Apparatus according to claim 1, characterised in that a controllable flap (17) is provided, by means of which the interior of the transport container (1) can be acted upon pulsewise by the aerodynamic pressure (9) (Fig. 1).

9. Apparatus according to claim 1, characterised in that the transport container (1) has at least one lateral air inlet (37) and one lateral air outlet (38) (Fig. 5).

**Revendications**

1. Dispositif pour le lancement d'objets stabilisés (7) à partir d'un avion, objets explosifs notamment tels que bombes, grenades et mines, représenté par un panier (1) au moins monté sur l'avion (9) et contenant plusieurs objets juxtaposés (7) à éjecter qui présentent un alignement coaxial l'un par rapport à l'autre d'une part, avec le panier (1) d'autre part, ce dernier comportant au moins une prise d'air dynamique (2 ; 37) orientée côté frontal et une sortie d'air (3) prévue côté arrière, caractérisé en ce que les objets stabilisés (7), dotés d'empennages-freins rigides (8) en forme de disques, sont au contact l'un de l'autre dans une gaine d'air située à l'intérieur du panier (1) et directement reliée à la prise d'air (2 ; 37), en ce que ces mêmes objets (7) sont placés sur une glissière (4) au moins, en ce que cette dernière s'engage dans un évidement (20) au moins de l'empennage-frein (8), en ce que des interstices (16) sont prévus entre la paroi interne (1a) du panier (1) et les objets (7), ou les empennages-freins (8) de ces derniers, et en ce que le panier (1) est doté d'un système unique de blocage manœuvrable (11) pour le déverrouillage simultané de tous les objets (7) (Figures 1, 3a, 3b, 5).

2. Dispositif selon la revendication 1, caractérisé en ce qu'un cylindre déflecteur (5), monté à l'arrière du panier (1), dirige le courant externe (q') sur l'objet (7) sortant du panier (1) précité (figure 1).

3. Dispositif selon une des revendications 1 et 2, caractérisé en ce que l'objet (7') présente une forme cylindrique (figures 2a, 2b).

4. Dispositif selon une des revendications 1 et 2, caractérisé en ce que l'objet (7) présente au moins une forme à peu près sphérique (figures 3a, 3b).

5. Dispositif selon une quelconque des revendications 1 à 4, caractérisé en ce que des amortisseurs (15) sont prévus sur l'empennage-frein (8) (figures 3a, 3b).

6. Dispositif selon la revendication 1, caractérisé en ce que la position axiale du premier objet (7) dans le sens du vol est garantie par son appui sur une glissière (4) et sur la paroi côté frontal (1a) ou une butée (13), le dernier objet (7) étant maintenu dans l'axe par une tige manœuvrable (12) du dispositif de blocage (11) jusqu'à son déverrouillage (figure 1).

7. Dispositif selon l'une des revendications 1 ou 6, caractérisé en ce que trois glissières (4) sont prévues sur la paroi interne (1a) du panier (1) et en ce que la force normale de l'objet (7) s'exerce sur deux points (21, 22) d'une glissière inférieure au moins (figures 1, 3a, 3b).

8. Dispositif selon la revendication 1, caractérisé par un volet orientable (17) qui permet de soumettre l'intérieur du panier (1) à une charge impulsionnelle de pression dynamique (q) (figure 1).

9. Dispositif selon la revendication 1, caractérisé en ce que le panier (1) présente au moins une entrée (37) et une sortie d'air (38) latérales (figure 5).

FIG. 1

**FIG.2a**

18

7'

18

19      7a      7b

**FIG.2b**

7'

18

# FIG. 3a

FIG. 3b

FIG. 4
26

FIG. 5